# EUROPÄISCHE PATENTSCHRIFT

(11) **EP 1 959 154 B1**
(45) Veröffentlichungstag und Bekanntmachung des Hinweises auf die Patenterteilung: **30.12.2009**
(21) Anmeldenummer: 08002088.6
(22) Anmeldetag: 05.02.2008
(51) Int. Cl.: F16F 9/348

(54) **Dämpfventil mit optimierter Ventilöffnungsfunktion**
Damping valve with optimised valve opening function
Soupape d'amortissement doté d'une fonction d'ouverture de soupape optimisée

(30) Priorität: 16.02.2007 DE 102007007722
(43) Veröffentlichungstag der Anmeldung: 20.08.2008
(73) Patentinhaber: ZF Friedrichshafen AG, 88038 Friedrichshafen (DE)
(72) Erfinder: Kruse, Alexander Dr., 97440 Werneck (DE); Starobinski, Rudolf Prof. Dr., 22301 Hamburg (DE)

(56) Entgegenhaltungen:
- DE-A1- 19 712 895
- JP-A- 3 168 430

## Beschreibung

Die Erfindung betrifft ein Dämpfventil gemäß dem Oberbegriff von Patentanspruch 1.

Ein Dämpfventil besteht im einfachsten Fall aus einem Ventilkörper mit mindestens einem Durchgangskanal, der von einer Ventilscheibe in seinem wirksamen Durchlassquerschnitt beeinflusst wird. Die Ventilscheibe kann von einer Ventilfeder oder durch Eigenspannung in einer vorbestimmten Stellung gehalten werden. Ein grundsätzliches Problem besteht darin, dass bei einem derartigen Dämpfventil schon bei einer kleinen Öffnungsbewegung beim Durchlassquerschnitt ein deutlicher Zuwachs auftritt. Diese sprunghafte Änderung wirkt sich als Dämpfkraftsprung aus, der akustisch in Erscheinung tritt.

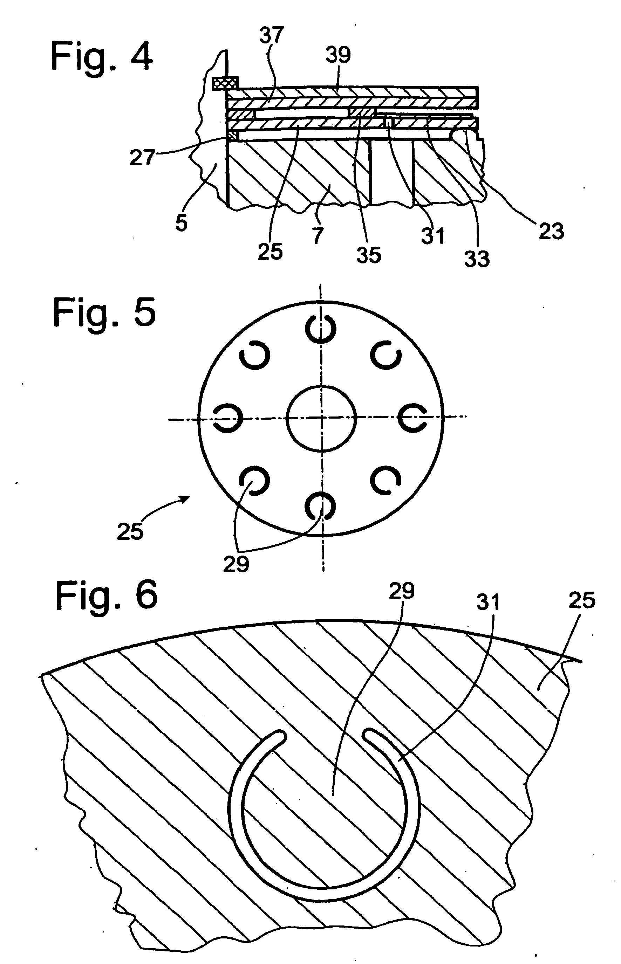

Schon bei der DE 29 09 278 A1 hat man dieses Problem erkannt und eine starre Ventilstützscheibe entwickelt, die parallele Biegekanten für eine elastische Ventilscheibe offenbart (Fig. 5). In einem ersten Dämpfmediumgeschwindigkeitsbereich kann das Dämpfmedium in dem Drosselkanal die elastische Ventilscheibe ab dem Bereich der Biegekante nach radial außen verformen, bis der Höhenversatz der Biegekante zu einer Abstützfläche ausgenutzt ist. Bei weiterem Druckanstieg hebt die Ventilstützscheibe zusammen mit der elastischen Ventilscheibe gegen eine zweite Ventilfeder ab. Durch diese Kombination mehrerer Feder und Ventilscheibenelemente kann ein vorteilhaftes Öffnungsverhalten erreicht werden.

Alternativ kann man, wie die US 5 042 624 zeigt auch ein elastisches Ventilscheibenpaket in Kombination mit zwei unabhängigen Ventilsitzflächen für zwei Ventilscheibengruppen verwenden. Der Nachteil dieser Lösung besteht jedoch darin, dass sich die Vielzahl der Toleranzen der Ventilscheibenmaterialstärken und die axialen Versatzmaße der Ventilsitzflächen negativ auf die Einhaltung der Vorspannkräfte der Ventilscheiben auswirken.

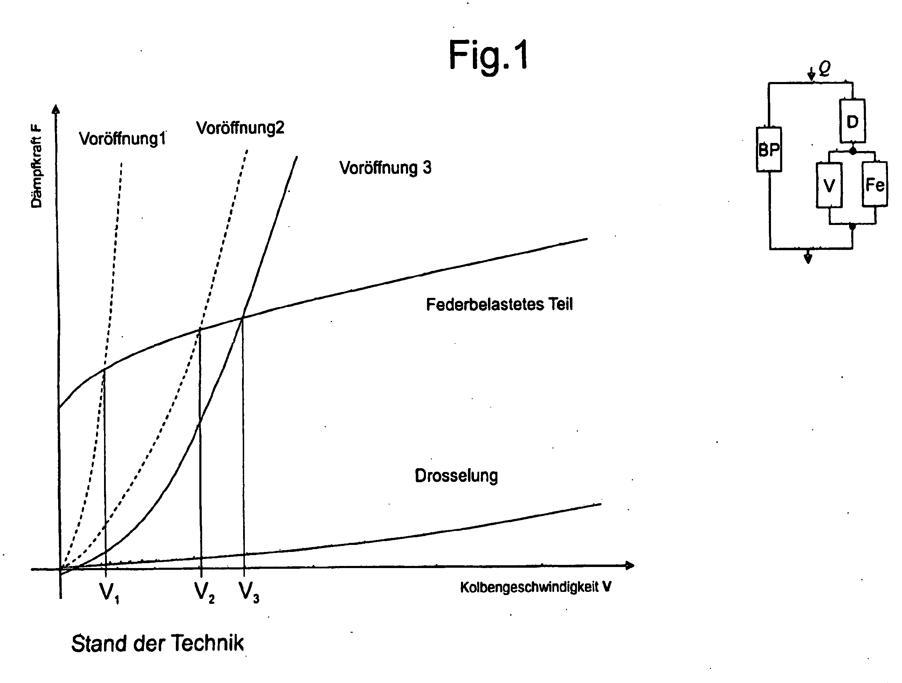

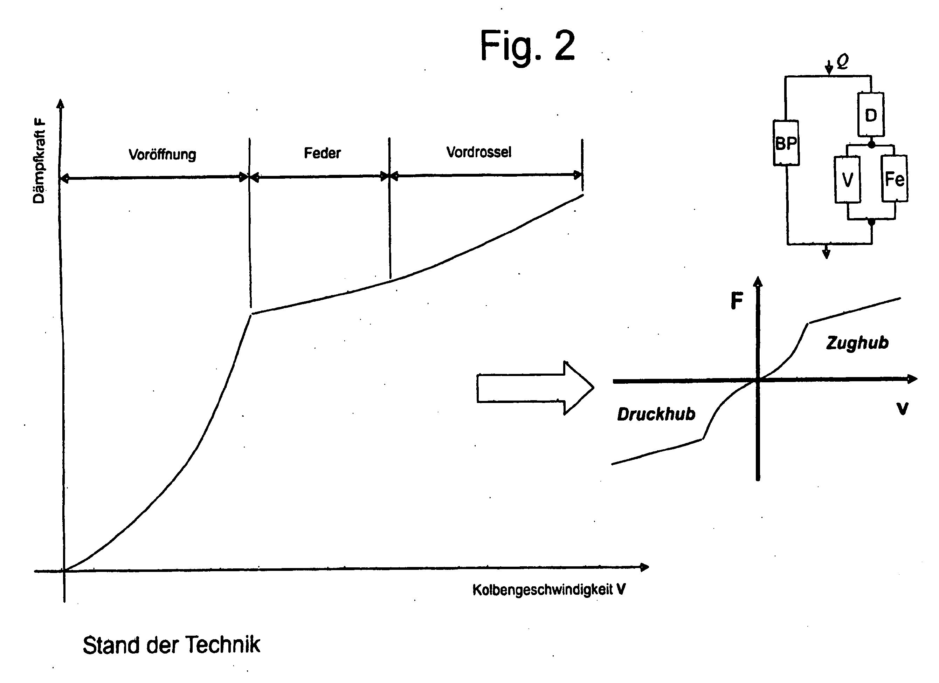

Die Figuren 1 und 2 enthalten jeweils ein Ersatzschaubild eines beliebigen Schwingungsdämpfers und die damit erreichbaren Dämpfkraftkennlinien. Ein Volumenstrom Q teilt sich in zwei Strömungswege. BP steht für Bypass und berücksichtigt alle Leckagen zwischen zwei Arbeitsräumen, z. B. an einem Kolbenring oder einer Kolbenstangenführung. Für die Betrachtung der Dämpfkraftkennlinie ist dieser Anteil zu vernachlässigen. In dem parallelen Strömungsweg sind in der Regel drei Strömungswiderstände oder Dämpfventilfunktionselemente vorhanden. Mit dem Bezugszeichen V soll ein sehr kleiner Voröffnungsquerschnitt benannt sein, der schon bei sehr kleinen Volumenströmen Q eine steile Dämpfkraftkennlinie erzeugt. Dem Voröffnungsquerschnitt ist ein federkraftbelastetes Ventilelement parallel geschaltet, das häufig eine degressive oder lineare Kennlinie aufweist. Bei maximal geöffnetem Ventilelement Fe wirkt sich eine Drosselung in einem Durchlasskanal zwischen zwei Arbeitsräumen aus, wodurch bei sehr hohen Kolbengeschwindigkeiten eine stark progressive Dämpfkraftkennlinie erzeugt wird. In der Fig. 1 sind verschiedene Kennlinien von verschiedenen Voröffnungsgrößen dargestellt. Allen gemeinsam ist der ausgeprägt progressive Kennlinienverlauf. In der Fig. 2 ist die aus Voröffnungsquerschnitt, federbelastetem Ventilelement und Drosselung überlagerte Dämpfkraftkennlinie mit den jeweiligen Wirkungsabschnitten dargestellt. Aus der Zusammenschau der Fig. 1 und 2 ist ersichtlich, dass unabhängig von der Größe der Voröffnung ein scharfer Kennlinienknick entsteht, der für die Geräuschbildung im Dämpfventil verantwortlicht ist. An dem Kennlinienknick setzt die Öffnungsbewegung des federkraftbelasteten Ventilelements ein. Bei einer Kolbengeschwindigkeit V1 oder V2 oder V3 findet eine undefinierte Öffnungs- und Schließbewegung des federkraftbelasteten Ventilelements statt, die als Flattern ein Geräusch verursacht.

Die DE 197 12 895 A1 beschreibt insbesondere in der Zusammenschau der Figuren 1 und 3 ein Dämpfventil mit einem strömungsrichtungsabhängigen Voröffnungsventil. Das Voröffnungsventil verfügt über eine Rückschlagventilscheibe, deren Abhubweg von einer Deckscheibe begrenzt wird. Die Rückschlagventilscheibe liegt auf einer Ventilscheibe auf und weist an ihrem Innendurchmesser Federzungen auf, die derart bemessen sind, dass die Rückschlagventilscheibe schon bei einer sehr geringen Anströmungsgeschwindigkeit von der Ventilscheibe abhebt. Bei einer größeren Anströmgeschwindigkeit heben die Ventilscheibe, die Rückschlagventilscheibe und die Deckscheibe als Paket von einem Kolben ab.

Aufgabe der vorliegenden Erfindung ist es, ein im Aufbau einfaches Dämpfventil zu schaffen, das ein von Dämpfkraftsprüngen freies Öffnungsverhalten aufweist.

Erfindungsgemäß wird die Aufgabe dadurch gelöst, dass die elastische Ventilscheibe einen Drosselquerschnitt aufweist, der in Reihe zu dem Durchlasskanal wirkt, wobei der Drosselquerschnitt von einer zweiten Ventilscheibe beeinflusst wird, die auf der dem Dämpfventilkörper abgewandten Seite der elastischen Ventilscheibe aufliegt und deren Abhubbewegung von der Ventilstützscheibe begrenzt wird, wobei der Drosselquerschnitt von einem freigeschnittenen Zungenbereich der elastischen Ventilscheibe gebildet wird, der eine von der Abhubbewegung der elastischen Ventilscheibe unabhängige Öffnungsbewegung ausführt.

Die geschichteten Ventilscheiben wirken mit einer einzigen Ventilsitzfläche am Dämpfventilkörper zusammen, so dass Fertigungstoleranzen nur einen vernachlässigbaren Einfluss auf das Öffnungsverhalten der einzelnen Ventilscheiben ausüben. Insgesamt liegt eine kompakte Bauform vor, die vielfältige Möglichkeiten zur Anpassung der Dämpfventilkräfte bietet, so dass ein sprunghafter Dämpfkraftanstieg bei der Abhubbewegung ausgehend von einer maximal geschlossenen Ventilscheibenstellung bis zu einer maximal geöffneten Ventilscheibenstellung auftritt.

In weiterer vorteilhafter Ausgestaltung ist der freigeschnittene Zungenbereich radial innerhalb der Ventilsitzfläche des Dämpfventitkörpers ausgeführt. Der Drosselbereich in der elastischen Ventilscheibe kann vergleichsweise groß gewählt werden, da keine radiale Überdeckung mit der Ventilsitzfläche besteht und der Drosselquerschnitt von der zweiten Ventilscheibe abgedeckt wird. Ein seitlicher Abfluss über die Ventilsitzfläche ist ausgeschlossen.

Gemäß einem Unteranspruch ist axial zwischen der elastischen Ventilscheibe und der Ventilstützscheibe mindestens eine Distanzscheibe angeordnet, deren Bauhöhe den maximalen Abhubweg der zweiten Ventilscheibe bestimmt. Durch die Wahl der Distanzscheibenhöhe kann das Öffnungsverhalten des gesamten Ventilscheibenpakets beeinflusst werden.

Auch die zweite Ventilscheibe kann elastisch ausgeführt sein und bei der Abhubbewegung von der elastischen Ventilscheibe verformt werden.

Die zweite Ventilscheibe kann mindestens einen aus der Ebene einer Deckfläche ausgestellten Federsteg aufweisen, der sich an der Ventilstützscheibe abstützen kann.

Für eine optimale Ventilscheibenabhubbewegung ist vorgesehen, dass die zum Abhub der zweiten Ventilscheibe von der ersten Ventilscheibe notwendige Druckkraft kleiner ist als die Druckkraft zum Abhub der elastischen Ventilscheibe von der Ventilsitzfläche des Dämpfventilkörpers.

Vorteilhafterweise wird die Öffnungsbewegung des Zungenbereichs von einer kleineren Druckkraft initiiert als die Abhubbewegung der elastischen Ventilscheibe von der Ventilsitzfläche des Dämpfventilkörpers.

Es kann auch die mindestens eine Ventilstützscheibe elastisch ausgeführt sein, so dass alle beteiligten Ventilscheiben an der Abhubbewegung vom Ventilkörper betroffen sind.

Anhand der folgenden Figurenbeschreibung soll die Erfindung näher erläutert werden.

Es zeigt:
- Fig.1: Ersatzschaubild und Dämpfkraftkennlinie eines konventionellen Dämpfventils
- Fig. 2: Dämpfkraftkennlinie nach Fig. 1 mit den jeweils wirksamen Ventilelementen
- Fig. 3: Dämpfventil im Kolben eines Schwingungsdämpfers
- Fig. 4: Vergrößerte Darstellung des Ventilpakets vom Dämpfventil
- Fig. 5: Elastische Ventilscheibe in der Draufsicht
- Fig. 6: Ausschnittvergrößerung zur Fig. 5
- Fig. 7: Draufsicht zur zweiten Ventilscheibe
- Fig. 8: Schnittdarstellung zur Fig. 7
- Fig. 9-12: Darstellung der Ventilabhubbewegung
- Fig.13: Ersatzschaubild und Dämpfkraftkennlinie des erfindungsgemäßen Dämpfventils
- Fig. 14: Überlagerte Dämpfkraftkennlinie

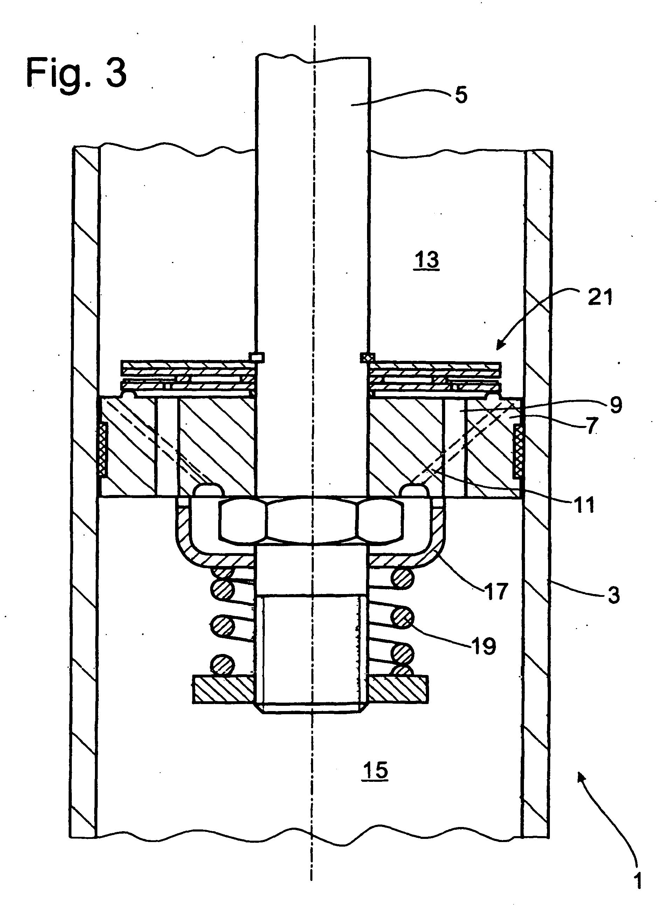

Die Fig. 3 zeigt einen Ausschnitt aus einem Schwingungsdämpfer 1 mit einem Zylinder 3, in dem eine Kolbenstange 5 axial beweglich geführt ist. An der Kolbenstange ist ein Kolben 7 befestigt, in dem mindestens ein Durchlasskanal 9; 11 ausgeführt ist. Der Kolben 7 trennt einen kolbenstangenseitigen Arbeitsraum 13 von einem kolbenstangenfernen Arbeitsraum 15, wobei beide Arbeitsräume mit einem Dämpfmedium gefüllt sind.

An einem Austrittsende im kolbenstangenfernen Arbeitsraum 15 verschließt ein starrer Ventilring 17 den Durchlasskanal 11, wobei der Ventilring von einer Ventilfeder 19 auf den Kolben vorgespannt wird. Der Kolben fungiert als Dämpfventilkörper für das Dämpfventil 11; 17; 19. Diese Dämpfventilbauform ist allgemein bekannt und soll den Unterschied zur Erfindung verdeutlichen.

Der Durchlasskanal 9 wirkt mit einem Ventilscheibenpaket 21 zusammen, das in der Fig. 4 vergrößert dargestellt ist. Der Dämpfventilkörper 7 verfügt über eine kreisringförmige, geschlossene Ventilsitzfläche 23, auf der eine elastische Ventilscheibe 25, im weiteren erste Ventilscheibe genannt, vorgespannt ist. Die erste Ventilscheibe 25 zentriert sich beispielsweise an der Kolbenstange 5 und stützt sich axial innenseitig auf einem Lagerring 27 ab. Zwischen der Ventilsitzfläche und dem Außendurchmesser des Lagerrings 27 liegt ein Ringraum 28 vor.

Aus der Fig. 5 ist die besondere Ausgestaltung der ersten Ventilscheibe 25 erkennbar, die wie die Fig. 6 zeigt, eine Mehrzahl von freigeschnittenen Zungenbereichen 29 aufweist. Die Freischnitte an den Rändern der Zungenbereiche bilden Drosselquerschnitte 31, die von einer zweiten Ventilscheibe 33, die auf einer dem Dämpfventilkörper 7 abgewandten Seite auf der ersten Ventilscheibe 25 aufliegt, zumindest teilweise abgedeckt werden. Die Konturen der Freischnitte bestimmen die Größe und damit das Umformverhalten/die Federrate der Zungenbereiche 29. Man kann vorsehen, dass in der ersten Ventilscheibe Zungenbereiche unterschiedlicher Größe und Form verwendet werden, um eine Öffnungs-Folgefunktion von mehreren Zungenbereichen zu verwirklichen. Die zweite Ventilscheibe zentriert sich an einer Distanzscheibe 35, die einen axialen Abstand zu mindestens einer Ventilstützscheibe 37; 39 definiert, die bevorzugt ebenfalls elastisch ist.

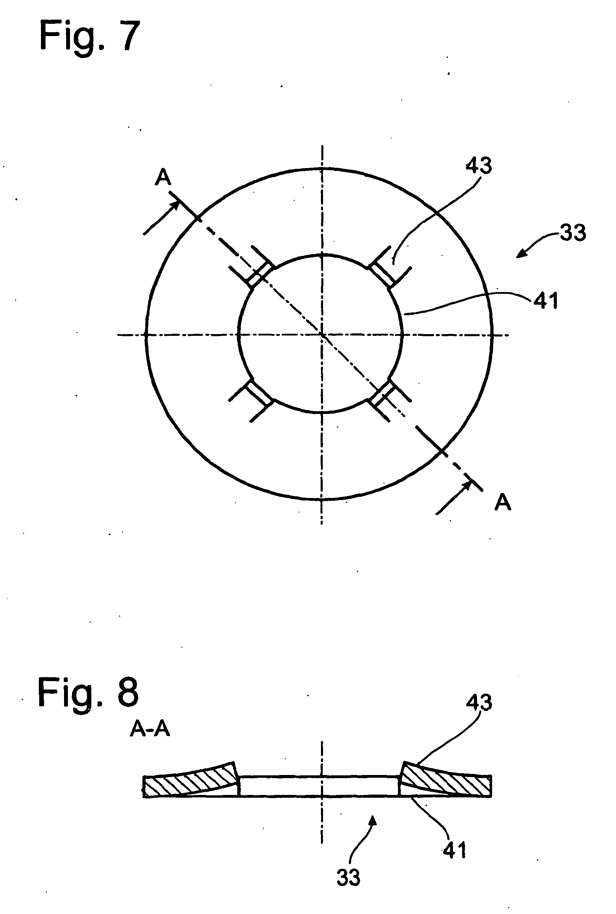

Der axiale Abstand zwischen der ersten Ventilscheibe 25 und der Ventilstützscheibe 37 bestimmt den Abhubweg der zweiten Ventilscheibe, die als einfache Flatterscheibe oder, wie die Figuren 7 und 8 zeigen, auch elastisch ausgeführt sein kann und mindestens einen aus der Ebene einer Deckfläche 41 ausgestellten Federsteg 43 aufweist.

Mit der Figurenfolge 9 bis 12 wird das Öffnungsverhalten des Ventilscheibenpakets 21 verdeutlicht. Bei einer kleinen Kolbenstangeneinfahrgeschwindigkeit herrscht in dem Ringraum 28 zwischen dem Dämpfventilkörper 7 und der Unterseite der ersten Ventilscheibe 25 nur ein kleiner Druck, so dass die Druckkraft, die auf die Ventilscheibe 25 wirkt weder einen Zungenbereich 29 aus der Planlage bewegt, noch die ganze Ventilscheibe von der Ventilsitzfläche 23 abheben lässt. Lediglich die zweite Ventilscheibe 33 hebt von der ersten Ventilscheibe 25 ab und gibt den in Reihe zum Drosseikanal 9 wirksamen Drosselquerschnitt 31 frei, so dass Dämpfmedium aus dem kolbenstangenfernen Arbeitsraum 15 in den kolbenstangenseitigen Arbeitsraum 13 strömen kann und dabei eine geringe Dämpfkraft erzeugt.

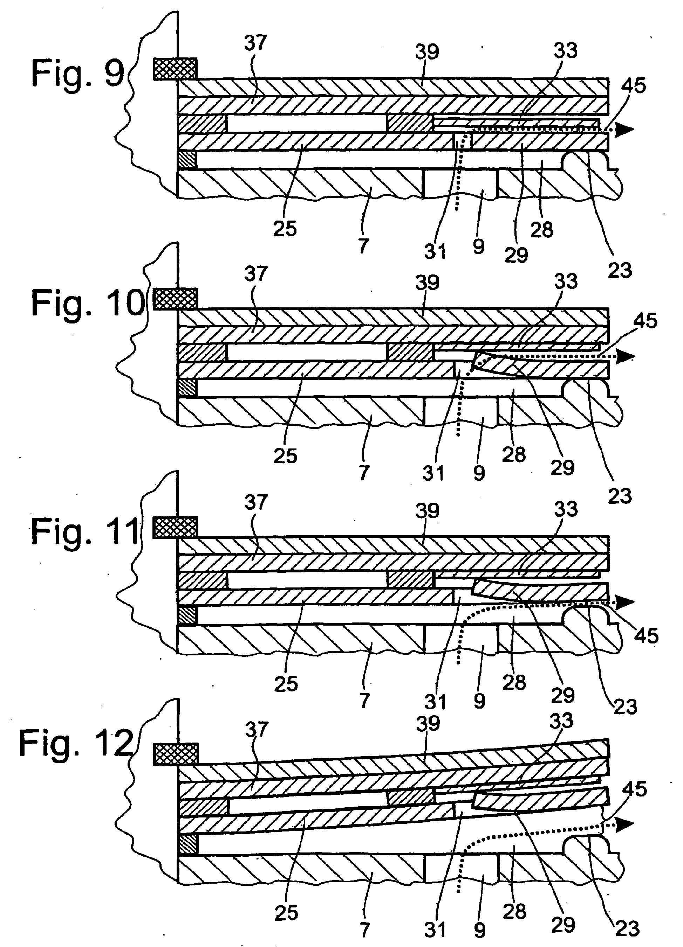

In der Fig. 10 ist eine nächste Phase der Abhubbewegung des Ventilscheibenpakets 21 abgeschlossen, die bei einer im Vergleich zur Fig. 9 erhöhten Kolbengeschwindigkeit auftritt. Die zweite Ventilscheibe 33 hat an der Unterseite der Ventilstützscheibe 37 ihre maximale Durchlassposition eingenommen und die freigeschnittenen Zungenbereiche 29 sind aus der Planlage elastisch verformt, so dass der wirksame Drosselquerschnitt 31 in der ersten Ventilscheibe zugenommen hat. Die wirksame Dämpfkraft wird von der Strömungsgeschwindigkeit und der Größe der Drosselquerschnitte bestimmt. Der ringförmige Austrittsquerschnitt 45 aus dem Spalt zwischen der ersten Ventilscheibe 25 und der Ventilstützscheibe 37 ist so groß, dass keine Nachdrosseleffekte auftreten. Die die Öffnungsbewegung der Zungenbereiche 29 initiierende Druckkraft ist kleiner als die für die Abhubbewegung der ersten Ventilscheibe 25 von der Ventilsitzfläche 23 notwendige Druckkraft, wobei die maximale Abhubposition von der Ventilstützscheibe 37 begrenzt wird.

Bei weiterer Steigerung der Kolbengeschwindigkeit bzw. Erhöhung der auf die erste Ventilscheibe 25 wirksamen Druckkraft hebt die erste Ventilscheibe 25 gemäß Fig. 11 zusammen mit der zweiten Ventilscheibe 33 von der Ventilsitzfläche ab, bis die Ventilscheibe 25 an der Unterseite der Ventilstützscheibe 37 zur Anlage kommt. Dabei kann das Dämpfmedium direkt zwischen der Ventilsitzfläche 23 und der Ventilscheibe aus dem Drosselkanal 9 in den kolbenstangenseitigen Arbeitsraum 13 übertreten.

Die Fig. 12 zeigt die maximale Abhubstellung des Ventilscheibenpakets 21, bei der die erste Ventilscheibe 25 zusammen mit der mindestens einen Ventilstützscheibe 37; 39 elastisch geschirmt wird und der Austrittsquerschnitt 45 die Dämpfkraft bestimmt.

Ein Schwingungsdämpfer führt eine oszillierende Bewegung mit ständig sich ändernder Hubgeschwindigkeit aus. Bei jeder Bewegungsrichtungsänderung wird der Zustand v = 0 durchfahren, so dass dann das Abhubverhalten nach Fig. 9 abläuft und sich in Abhängigkeit der weiteren Hubgeschwindigkeit des Kolbens die Phasen nach den Fig. 10 bis 12 anschließen können, womit eine kontinuierliche Vergrößerung der Drosselquerschnitte und damit Dämpfkräfte verbunden ist.

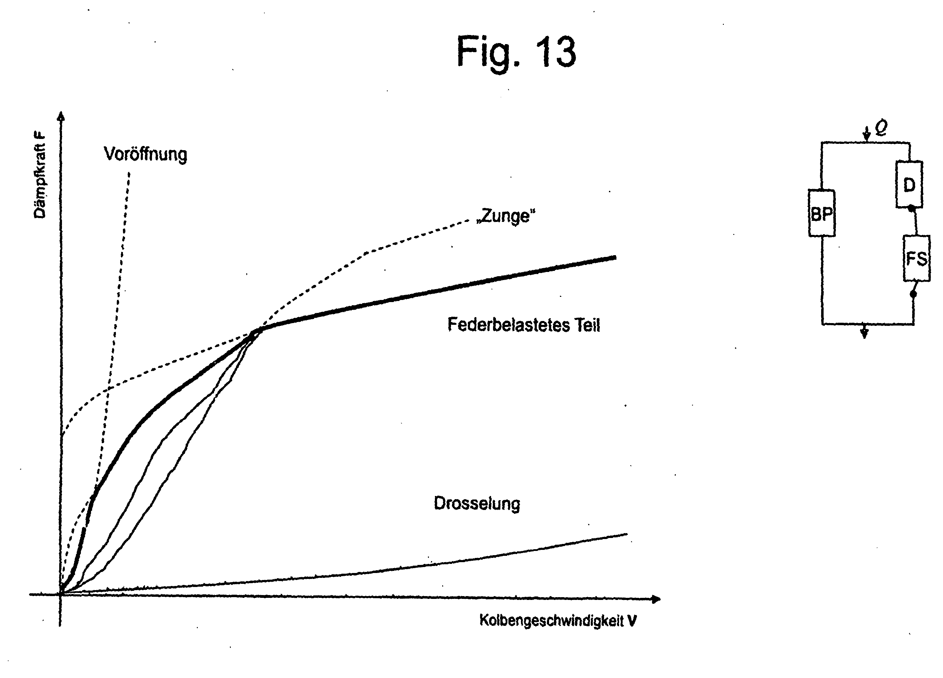

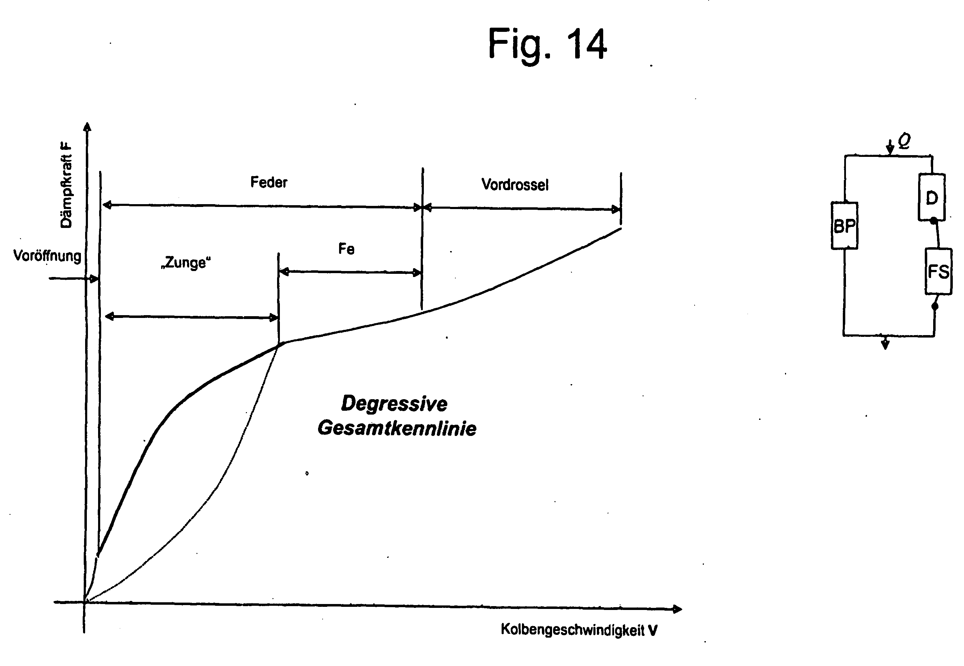

Die Figuren 13 und 14 zeigen jeweils das Ersatzschaubild des erfindungsgemäßen Dämpfventils. Ein wesentlicher Unterschied besteht darin, dass, abgesehen von den Leckagenanteilen BP, der gesamte Volumenstrom Q durch den Durchlasskanal und die damit verbundene Drosselung und durch einen symbolischen Ersatzwiderstand FS fließen muss. Der Druck, der z. B. an der zweiten Ventilscheibe 33 nach deren Abhubbewegung anliegt, bleibt beibehalten, auch wenn sich eine Zunge 29 verformt oder die erste Ventilscheibe ggf. zusammen mit den Ventilstützscheiben verformt wird. Der Voröffnungsquerschnitt, die Zunge und die Ventilscheiben 25 und 37; 39 werden vom Volumenstrom in einer zwanghaften Reihenfolge betätigt. Es gibt keinen Betriebspunkt bzw. keine Kolbengeschwindigkeit die eine Flatterneigung einer Ventilscheibe fördert. An den knickfreien Übergängen zwischen den einzelnen Dämpfkraftkennlinienabschnitten ist erkennbar, dass stets ein von Dämpfkraftsprüngen freier Dämpfkraftverlauf vorliegt.

Das erfindungsgemäße Ventilscheibenpaket ist nicht nur sinnvollerweise auf einer Dämpfventilkörperseite, sondern auch für beide Strömungsrichtung anwendbar.

## Patentansprüche

1. Dämpfventil mit einem Dämpfventilkörper, der mindestens einen Durchlasskanal aufweist, dessen Querschnitt von mindestens einer elastischen Ventilscheibe auf einer Ventilsitzfläche des Dämpfventilkörpers beeinflusst wird, wobei die elastische Ventilscheibe ab einem definierten Abhubweg an einer Ventilstützscheibe zur Anlage kommt,
**dadurch gekennzeichnet,**
**dass** die elastische Ventilscheibe (25) einen Drosselquerschnitt (31) aufweist, der in Reihe zu dem Durchlasskanal (9) wirkt, wobei der Drosselquerschnitt (31) von einer zweiten Ventilscheibe (33) beeinflusst wird, die auf der dem Dämpfventilkörper (7) abgewandten Seite der elastischen Ventilscheibe (25) aufliegt und deren Abhubbewegung von der Ventilstützscheibe (37) begrenzt wird, wobei der Drosselquerschnitt (31) von einem freigeschnittenen Zungenbereich (29) der elastischen Ventilscheibe (25) gebildet wird, der eine von der Abhubbewegung der elastischen Ventilscheibe (25) unabhängige Öffnungsbewegung ausführt.

2. Dämpfventil nach Anspruch 1,
**dadurch gekennzeichnet,**
**dass** der freigeschnittene Zungenbereich (29) radial innerhalb der Ventilsitzfläche (23) des Dämpfventilkörpers (7) ausgeführt ist.

3. Dämpfventil nach Anspruch 1,
**dadurch gekennzeichnet,**
**dass** axial zwischen der elastischen Ventilscheibe (25) und der Ventilstützscheibe (37) mindestens eine Distanzscheibe (35) angeordnet ist, deren Bauhöhe den maximalen Abhubweg der zweiten Ventilscheibe (33) bestimmt.

4. Dämpfventil nach Anspruch 1,
**dadurch gekennzeichnet,**
**dass** die zweite Ventilscheibe (33) elastisch ausgeführt ist und bei der Abhubbewegung von der elastischen Ventilscheibe (25) verformt wird.

5. Dämpfventil nach Anspruch 4,
**dadurch gekennzeichnet,**
**dass** die zweite Ventilscheibe (33) mindestens einen aus der Ebene einer Deckfläche (41) ausgestellten Federsteg (43) aufweist.

6. Dämpfventil nach Anspruch 1,
**dadurch gekennzeichnet,**
**dass** die zum Abhub der zweiten Ventilscheibe (33) von der ersten Ventilscheibe (25) notwendige Druckkraft kleiner ist als die Druckkraft zum Abhub der elastischen Ventilscheibe (25) von der Ventilsitzfläche (23) des Dämpfventilkörpers (7).

7. Dämpfventil nach Anspruch 1,
**dadurch gekennzeichnet,**
**dass** die Öffnungsbewegung des Zungenbereichs (29) von einer kleineren Druckkraft initiiert wird als die Abhubbewegung der elastischen Ventilscheibe (25) von der Ventilsitzfläche (23) des Dämpfventilkörpers (7).

8. Dämpfventil nach Anspruch 1,
**dadurch gekennzeichnet,**
**dass** die mindestens eine Ventilstützscheibe (37; 39) elastisch ausgeführt ist.

## Claims

1. Damping valve with a damping valve body which has at least one passage channel, the cross section of which is influenced by at least one elastic valve disc on a valve seat surface of the damping valve body, wherein the elastic valve disc comes to bear against a valve supporting disc after a defined lifting travel, **characterized in that** the elastic valve disc (25) has a throttle cross section (31) which acts in series with the passage channel (9), the throttle cross section (31) being influenced by a second valve disc (33) which rests on that side of the elastic valve disc (25) which faces away from the damping valve body (7) and the lifting movement of which is limited by the valve supporting disc (37), and the throttle cross section (31) being formed by a cut-free tongue region (29) of the elastic valve disc (25), said tongue region executing an opening movement which is independent of the lifting movement of the elastic valve disc (25).

2. Damping valve according to Claim 1, **characterized in that** the cut-free tongue region (29) is formed radially within the valve seat surface (23) of the damping valve body (7).

3. Damping valve according to Claim 1, **characterized in that** at least one spacer disc (35) is arranged axially between the elastic valve disc (25) and the valve supporting disc (37), the overall height of which spacer disc determines the maximum lifting travel of the second valve disc (33).

4. Damping valve according to Claim 1, **characterized in that** the second valve disc (33) is of elastic design and is deformed during the lifting movement from the elastic valve disc (25).

5. Damping valve according to Claim 4, **characterized in that** the second valve disc (33) has at least one spring web (43) which is deployed out of the plane of a cover surface (41).

6. Damping valve according to Claim 1, **characterized in that** the pressure force necessary for lifting the second valve disc (33) from the first valve disc (25) is smaller than the pressure force for lifting the elastic valve disc (25) from the valve seat surface (23) of the damping valve body (7).

7. Damping valve according to Claim 1, **characterized in that** the opening movement of the tongue region (29) is initiated by a smaller pressure force than the lifting movement of the elastic valve disc (25) from the valve seat surface (23) of the damping valve body (7).

8. Damping valve according to Claim 1, **characterized in that** the at least one valve supporting disc (37; 39) is of elastic design.

## Revendications

1. Soupape d'amortissement comprenant un corps de soupape d'amortissement qui présente au moins un canal de passage, dont la section transversale est influencée par au moins un disque de soupape élastique sur une surface de siège de soupape du corps de soupape d'amortissement, le disque de soupape élastique venant en appui contre un disque de support de soupape à partir d'une course de soulèvement définie,
**caractérisée en ce que**
le disque de soupape élastique (25) présente une section transversale d'étranglement (31) qui agit en série par rapport au canal de passage (9), la section transversale d'étranglement (31) étant influencée par un deuxième disque de soupape (33), qui s'applique du côté du disque de soupape élastique (25) opposé au corps de soupape d'amortissement (7), et dont le mouvement de course de soulèvement est limité par le disque de support de soupape (37), la section transversale d'étranglement (31) étant formée par une région de langue (29) du disque de soupape élastique (25) en contre-dépouille, qui effectue un mouvement d'ouverture indépendant du mouvement de course de soulèvement du disque de soupape élastique (25).

2. Soupape d'amortissement selon la revendication 1,
**caractérisée en ce que**
la région de langue (29) en contre-dépouille est réalisée radialement à l'intérieur de la surface de siège de soupape (23) du corps de soupape d'amortissement (7).

3. Soupape d'amortissement selon la revendication 1,
**caractérisée en ce que**
l'on dispose axialement entre le disque de soupape élastique (25) et le disque de support de soupape (37) au moins un disque d'espacement (35) dont la hauteur de construction définit la course de soulèvement maximale du deuxième disque de soupape (33).

4. Soupape d'amortissement selon la revendication 1,
**caractérisée en ce que**
le deuxième disque de soupape (33) est réalisé sous forme élastique et est déformé lors du mouvement de course de soulèvement du disque de soupape élastique (25).

5. Soupape d'amortissement selon la revendication 4,
**caractérisée en ce que**
le deuxième disque de soupape (33) présente au moins une languette de ressort (43) exposée hors du plan d'une surface de couverture (41).

6. Soupape d'amortissement selon la revendication 1,
**caractérisée en ce que**
la force de pression nécessaire pour le soulèvement du deuxième disque de soupape (33) du premier disque de soupape (25) est inférieure à la force de pression nécessaire pour le soulèvement du disque de soupape élastique (25) de la surface de siège de soupape (23) du corps de soupape d'amortissement (7).

7. Soupape d'amortissement selon la revendication 1,
**caractérisée en ce que**
le mouvement d'ouverture de la région de langue (29) est amorcé par une force de pression plus faible que le mouvement de soulèvement du disque de soupape élastique (25) de la surface siège de soupape (23) du corps de soupape d'amortissement (7).

8. Soupape d'amortissement selon la revendication 1,
**caractérisée en ce que**
l'au moins un disque de support de soupape (37 ; 39) est réalisé sous forme élastique.
